# EUROPEAN PATENT APPLICATION

(11) **EP 0 544 451 A1**
(43) Date of publication of application: **02.06.1993**
(21) Application number: 92310556.3
(22) Date of filing: 19.11.1992
(51) Int. Cl.: G06F 13/42

(54) **A communication bus**

(30) Priority: 23.11.1991 GB 9124916
(71) Applicant: CRAY COMMUNICATIONS LIMITED, Newbury, Berkshire RG14 5HG (GB)
(72) Inventor: Field, Anthony Vincent, Wootton Bassett, Wiltshire (GB); Blackburn, John Michael, Purton, Swindon, Wiltshire (GB)
(74) Representative: Hogg, Jeffery Keith

(57) **Abstract**

A communications bus through which a plurality of terminals (T) communicate and which comprises a transmit sub-bus (S_{T}) to which an output (OUT_{T}) of each terminal (T) is connected, a receive sub-bus (S_{R}) to which an input (IN_{R}) of each terminal is connected, repeater means (RPT) having an input (IN_{T}) connected to the transmit sub-bus (S_{T}) and an output (OUT_{R}) connected to the receive sub-bus (S_{R}) so as to receive information transmitted by each terminal on the transmit sub-bus (S_{T}) and to re-transmit this information on the receive sub-bus (S_{R}) for receipt by another terminal for which said infomation is intended, a transmit clock line (C_{T}) extending alongside said transmit sub-bus (S_{T}) , a receive clock line (C_{R}) extending alongside said receive sub-bus (S_{R}), and clock means (CK_{R}) connected to the receive clock line (C_{R}) in a region substantially adjacent to the point of connection of the repeater means (RPT) to the receive sub-bus (S_{R}) so that a clock signal generated by the clock means (CK_{R}) and the information re-transmitted by the repeater means (RPT) travel in the same directional sense as one another on the receive clock line (C_{R}) and receive sub-bus (S_{R}).

## Description

### Technical Field

This invention relates to a communications bus through which a plurality of terminals communicate and which includes a clock line to which a clock signal is applied and which is tapped by the terminals to synchronise their operation in communicating with one another.

A clock signal applied to the clock line of a bus travels at a finite speed and therefore the clock signal tapped by each of the terminals will be phase shifted compared with the signal at the point of application to the clock line. Similarly, an information signal transmitted on the bus between one terminal and another will experience a phase shift corresponding to the length of the bus conductors between these terminals. Where the information signal arid the associated clock signal travel in the same direction on the bus, the phase shift experienced by both signals will be the same assuming the same transmission parameters for all the bus conductors including the clock line. Each terminal can therefore use the clock signal as an absolute time datum for placing information signals on the bus and receiving information signals from the bus. However, where the information signal and associated clock signal travel in opposite directions on the bus, the phase shifts experienced by each will be compounded rather than cancel one another out, and a timing error will be incurred corresponding to twice the transit time or delay between the two terminals. This error is variable depending on the spacing between the terminal connections to the bus, but when the delay is short compared with the period of events being synchronised with the clock signal, it may be disregarded as insignificant. However, this variable delay becomes progressively more significant as the period of the timed events decreases, that is, as the clock frequency is increased to accommodate higher information transmission rates, and it creates an operational limitation on existing buses.

### Disclosure of the Invention

An object of the present invention is to provide a communications bus in which the timing problems caused by variable time delays on the bus are reduced or overcome.

This is achieved according to the invention by providing a communications bus comprising a transmit sub-bus to which an output of each terminal is connected, a receive sub-bus to which an input of each terminal is connected, repeater means having an input connected to the transmit sub-bus and an output connected to the receive sub-bus so as to receive information transmitted by each terminal on the transmit sub-bus and to re-transmit this information on the receive sub-bus for receipt by another terminal for which said information is intended, a transmit clock line extending alongside said transmit sub-bus, a receive clock line extending alongside said receive sub-bus, and clock means connected to the receive clock line in a region substantially adjacent to the point of connection of the repeater means to the receive sub-bus so that a clock signal generated by the clock means and the information re-transmitted by the repeater means travel in the same directional sense as one another on the receive clock line and receive sub-bus.

By separating the bus into a transmit sub-bus and a receive sub-bus with the terminals connected therebetween and communicating via repeater means, it is possible to provide transmit and receive clock lines with clock signals that always travel in the same direction as the information signals on the associated sub-buses. Thus, the clock signals and information signals keep in phase in being transmitted along the bus, and timing delays are avoided.

Preferably, the repeater means has its input and output connections to the transmit and receive sub-buses located at an intermediate region along the length of the bus with the terminals located both sides thereof and with each having a clock input connection connected to the receive clock line at a point in the region of the point of connection of the input connection from the receive sub-bus to said terminal. Clock signals and information signals then travel together away from the repeater means to the input connections of all the terminals.

The transmit sub-bus may comprise a single sub-bus with an input connection to the repeater means from the intermediate region along the length of the bus, or may comprise two sub-buses, one each side of the repeater means and each having a separate input connection to the repeater means at their adjacent ends in the intermediate region of the bus. Transmitted information signals then travel along each transmit sub-bus towards the repeater means. The transmit clock line comprises two transmit clock lines, one each side of the repeater means so that the clock signals on both also travel towards the repeater means, and the respective information signals and clock signals keep in phase with one another.

The repeater means may take its clock signal from either end of the two transmit clock lines in the intermediate region of the bus if there is a single transmit sub-bus, or may take a clock signal from the end of each of the two transmit clock lines in the intermediate region of the bus if there are two transmit sub-buses each with a separate input connection to the repeater means.

Separate clock means may be provided to generate clock signals for the transmit and receive sub-buses, or one or both of the adjacent ends of the transmit and receive sub-buses remote from the repeater means may be connected together to allow the one clock means to supply the clock signal for both sub-buses.

Furthermore, a spare sub-bus and switching means may be provided which is operational to allow the spare sub-bus to be used either in place of the transmit sub-bus or the receive sub-bus.

### Description of the Drawings

The invention will now be described by way of example with reference to the accompanying drawings in which:
Figure 1 is a schematic diagram of a communications bus according to one embodiment of the invention,
Figure 2 is a diagram showing the form of the clock signals and information signals on the bus of Figure 1,
Figure 3 is a schematic diagram of a communications bus according to a second embodiment of the invention, and
Figure 4 is a schematic diagram of a communications bus according to the invention provided with a spare sub-bus.

### Mode of Carrying Out the Invention

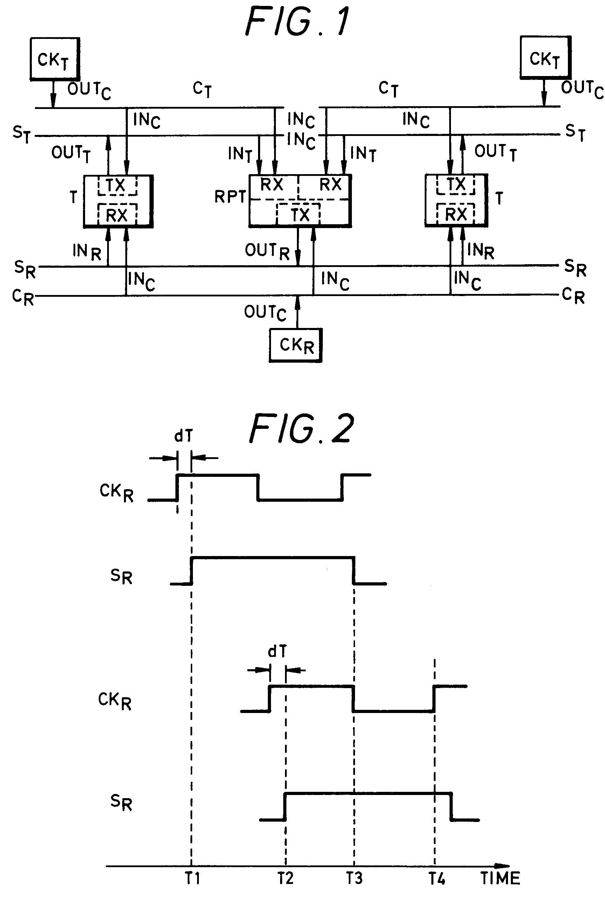

The bus illustrated in Figure 1 serves to interconnect a plurality of terminals T so that they can communicate with one another. Each terminal T includes transmitting means TX that produces digital output signals intended for one or more of the other terminals and which are applied via an output connection OUT_{T} to a transmit sub-bus S_{T}. Each terminal T also includes receiving means RX that is adapted to receive input signals via an input connection IN_{R} from a receive sub-bus S_{R}. Repeater means RPT is connected between the two sub-buses S_{T} and S_{R} via an input connection IN_{T} from the transmit sub-bus S_{T} and an output connection OUT_{R} to the receive sub-bus S_{R}, and is adapted to transfer said digital output signals from the transmit sub-bus S_{T} to the receive sub-bus S_{R}.

As shown in Figure 1, the transmit sub-bus S_{T} is in fact split into two transmit sub-buses with their adjacent ends each connected via a separate output connection IN_{T} to the repeater means RPT.

The output connection OUT_{R} of the repeater means RPT is connected to a central region of the receive sub-bus S_{R}, and the terminals T are located both sides of the repeater means between the receive sub-bus S_{R} and the respective transmit sub-buses S_{T}.

Each sub-bus S_{T}, S_{R} is operated as a TDM or slotted bus by transmitting said output signals within predetermined sub-divisions or slots of a fixed repetitive time frame defined by clock signals on respective clock lines. A separate clock line C_{T} is provided for each portion of the transmit sub-bus S_{T} and extends alongside it, and a single receive clock line C_{R} is provided alongside the receive sub-bus S_{R}. Each terminal T and the repeater means RPT has an input clock connection INc for each input and output connection to the sub-buses S_{T}, S_{R}, and each connection INc has its point of connection to the clock line C_{T}, C_{R} located adjacent to the point of connection of the corresponding input or output connection to the sub-bus S_{T}, S_{R}.

The clock signals are generated by clock means comprising a clock CK_{R} having an output connection OUT_{c} to the central region of the receive clock line C_{R} at a point adjacent to the output connection OUT_{R} from the repeater means RPT to the receive sub-bus S_{R}. The clock signal and output signals from the repeater means RPT therefore both travel together away from their respective output connections in both directions along the receive sub-bus and receive clock line, and therefore keep in phase with one another. This is illustrated in the signal diagrams in Figure 2 in which CK_{R} represents a typical clock signal and S_{R} represents a typical digital output signal from the repeater means RPT. The top pair of diagrams show that the output signal S_{R} is applied to the receive sub-bus S_{R} by the repeater means RPT starting at a time T1, a short time dT after the start of a pulse of the clock signal CK_{R} as received by the repeater means RPT, and continues until time T3 shortly after the start of the next pulse of the clock signal CK_{R}. The bottom pair of diagrams show that the output signal S_{R} is received by the terminal T for which it is intended, commencing at a time T2 a short time dT after the start of a pulse of the clock signal CK_{R} as received by said terminal T. This output signal S_{R} is read at time T4, the start of the next pulse of the clock signal CK_{R}. Assuming the same transmission conditions on the receive sub-bus S_{R} and receive clock line C_{R}, the transit time of the output signal S_{R} and the clock signal C_{R} between the repeater means RPT and the terminal T will be the same and thus the same phase relationship between these signals will be maintained at the terminal T, as shown in Figure 2.

The clock signal CK_{T} for each of the two transmit clock lines C_{T} is generated by a respective clock CK_{T} which is connected via an output connection OUT_{c} to the end of each clock line C_{T} remote from the repeater means RPT. The clock signal and output signals on the respective transmit clock lines C_{T} and transmit sub-buses S_{T} therefore both travel together towards the repeater means RPT, and therefore keep in phase with one another, the synchronisation of these signals being such as already described in relation to the receive sub-bus and receive clock line with reference to Figure 2.

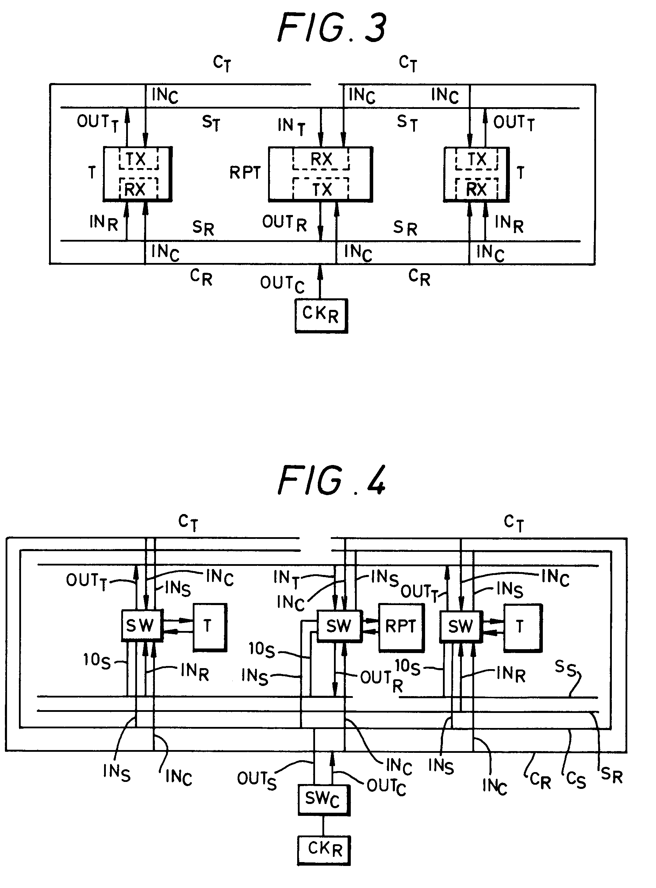

The embodiment of the invention illustrated in Figure 1 employs three clocks CK_{R} and CK_{T}; however, it is possible to reduce the number of clocks employed by connecting the respective adjacent ends of the transmit and receive clock lines C_{T} and C_{R} remote from the repeater means RPT so that the transmit clock CK_{T} can be omitted. This is done for each of the two transmit clock lines C_{T} in the embodiment of Figure 3. Furthermore, provided that the lengths of the clock line between the clock CK_{R} and each of its ends are the same, then they will arrive in phase at these ends, and only one need be tapped to provide an input clock connection INc for the repeater means, as shown in Figure 3.

The embodiment of Figure 3 is also further simplified by arranging that only one terminal can transmit an output signal at any one time and then joining the ends of the two transmit sub-buses so that there is only one transmit sub-bus S_{T}.

It will be appreciated that the operation of the bus of Figure 3 as regards the timing of the output signals and clock signal is substantially as described in relation to Figures 1 and 2, and phase differences due to respective pairs of these signals travelling relative to one another in opposite directions are avoided.

The embodiment of the invention illustrated in Figure 3 having a single transmit sub-bus S_{T} and a single receive sub-bus S_{R} can be readily adapted, as shown in Figure 4, to incorporate a single spare bus Sₛ which can be used in place of either sub-bus S_{T} or S_{R} if either were to fail. The input and output connections for each terminal T and the repeater means RPT are connected via switching means SW which also has a connection IOₛ to the spare bus at a point adjacent to the connection points of the respective input and output connections IN_{R}, OUT_{T} or IN_{T}, OUT_{R}. Each switching means SW is adapted so that it can be operated selectively to replace either the input connection or the output connection with the respective IOₛ connection. A failure of either the transmit sub-bus S_{T} or the receive sub-bus S_{R} will operate all of the switching means SW accordingly to replace the connections to the failed sub-bus with the connections IOₛ to the spare sub-bus Sₛ.

The spare sub-bus Sₛ may also incorporate a spare clock line Cₛ which extends the full length of the combined clock line C_{R}, C_{T}, and which for every input clock connection INc to a switching means SW has a corresponding spare input clock connection INₛ to that switching means, the respective points of connection to the clock lines C_{R}, C_{T} and Cₛ being located adjacent to one another along these lines. Also, the clock CK_{R} is connected via switching means SW_{c} and the output connection OUT_{c} to the central region of the clock line C_{R}, C_{T} and an alternative output connection OUTs is provided between the switching means SW_{c} and the central region of the spare clock line Cₛ so that in the event of failure of the clock line C_{R}, C_{T}, the switching means SW_{c} can be operated in conjunction with the other switching means SW to switch the clock signal from the clock line C_{R}, C_{T} to the spare clock line Cₛ, and to replace all of the input clock connections INc with the spare input clock connections INₛ.

As shown in the drawings, the transmit and receive buses are shown as single conductors, but it will be appreciated that they could equally well comprise a set of parallel conductors which transmit output signals as parallel digital information with a corresponding number of multiple input and output connections to and from the terminals and the repeater means.

As regards the protocol involved in controlling the transmission and receipt of the output signals on the sub-buses, this may involve the use of slot maps to identify the use of individual slots of the frame and/or the use of address data that is transmitted with the output signals and is read by the receiving means of the terminals, such techniques being well known in the art.

The invention is of particular benefit as used in a high speed switching network comprising a plurality of packet switching nodes each of which incorporates a communications bus according to the invention to interconnect terminals in the form of input and output devices. The avoidance of variable time delays between information and clock signals across the bus between these input and output devices allows the bus to be run at a higher clock rate, thereby increasing the performance of the network.

## Claims

1. A communications bus through which a plurality of terminals communicate and which includes a clock line to which a clock signal is applied and which is tapped by the terminals to synchronise their operation in communicating with one another, characterised in that the bus comprises a transmit sub-bus to which an output of each terminal is connected, a receive sub-bus to which an input of each terminal is connected, repeater means having an input connected to the transmit sub-bus and an output connected to the receive sub-bus so as to receive information transmitted by each terminal on the transmit sub-bus and to re-transmit this information on the receive sub-bus for receipt by another terminal for which said information is intended, a transmit clock line extending alongside said transmit sub-bus, a receive clock line extending alongside said receive sub-bus, and clock means connected to the receive clock line in a region substantially adjacent to the point of connection of the repeater means to the receive sub-bus so that a clock signal generated by the clock means and the information re-transmitted by the repeater means travel in the same directional sense as one another on the receive clock line and receive sub-bus.

2. A communications bus as claimed in claim 1 in which the repeater means has its input and output connections to the transmit and receive sub-buses located at an intermediate region along the length of the bus with the terminals located both sides thereof along the length of the bus and with each terminal having a clock input connection connected to the receive clock line at a point in the region of the point of connection of the input connection from the receive sub-bus to said terminal.

3. A communications bus as claimed in claim 2 in which the transmit sub-bus comprises two sub-buses, one having output connections from the terminals on one side of the repeater means and the other having output connections from the terminals on the other side of the repeater means, and each being connected to a respective input of the repeater means at their adjacent ends in said intermediate region of the bus.

4. A communications bus as claimed in claim 2 in which the repeater means has an input connection from the transmit sub-bus which is connected to the transmit sub-bus at an intermediate region along the length of the transmit sub-bus.

5. A communications bus as claimed in claim 1 in which clock means is connected to the transmit clock line so that a clock signal generated by the clock means and the information transmitted by each terminal travel in the same directional sense as one another on the transmit clock line and transmit sub-bus, each terminal having a clock input connection connected to the transmit clock line at a point in the region of the point of connection of the output connection from the terminal to the transmit sub-bus.

6. A communications bus as claimed in claim 2 in which the transmit clock line comprises two transmit clock lines, one on either side of the repeater means, each terminal on one side of the repeater means having a clock input connection from the transmit clock line on said one side of the repeater means, and each terminal on the other side of the repeater means having a clock input connection from the transmit clock line on said other side of the repeater means, each clock input connection being connected to the respective transmit clock line at a point in the region of the point of connection of the output connection from the terminal to the transmit sub-bus.

7. A communications bus as claimed in claim 3 in which the transmit clock line comprises two transmit clock lines each associated with a corresponding one of the two transmit sub-buses either side of the repeater means, each terminal having an output connection to a point on a respective transmit sub-bus and an input clock connection from a point on the associated transmit clock line in the region of said point of connection of said output connection along the length of the bus, and each input to the repeater means from a respective transmit sub-bus having associated with it an input clock connection from the associated transmit clock line, with the points of connection of these two input connections with the respective sub-bus and associated transmit clock line being in the region of the adjacent ends thereof.

8. A communication bus as claimed in claim 4 in which the transmit clock line comprises two transmit clock lines each associated with a corresponding part of the transmit sub-bus on one side or the other of the input connection to the repeater means, each terminal having an output connection to a point on the transmit sub-bus and an input clock connection from a point on the associated transmit clock line in the region of said point of connection of said output connection along the length of the bus, and the repeater means having an input clock connection from one of the two adjacent ends of the transmit clock lines in said intermediate region along the length of the transmit sub-bus.

9. A communications bus as claimed in claim 5 in which separate clock means provide a clock signal to the receive clock line and the transmit clock line.

10. A communications bus as claimed in claim 6 in which a separate clock means provides a clock signal to the receive clock line and each of the two transmit clock lines, the clock means for the two transmit clock lines being connected thereto at their outer ends remote from the repeater means.

11. A communications bus as claimed in claim 5 in which at least one end of the receive clock line remote from the repeater means is connected to the adjacent end of the transmit clock line so that said clock means connected to the receive clock line proves the clock signal for both the receive and transmit clock lines.

12. A communications bus as claimed in claim 6 in which each end of the receive clock line remote from the repeater means is connected to the adjacent end of one of the two transmit clock lines so that said clock means connected to the receive clock line provides the clock signal for the receive clock line and both of the transmit clock lines.

13. A communications bus as claimed in claim 1 including a spare sub-bus and switching means which is operational to allow the spare sub-bus to be used either in place of the transmit sub-bus or the receive sub-bus.
